# EUROPÄISCHE PATENTSCHRIFT

(11) **EP 3 816 075 B1**
(45) Veröffentlichungstag und Bekanntmachung des Hinweises auf die Patenterteilung: **08.12.2021**
(21) Anmeldenummer: 19206178.6
(22) Anmeldetag: 30.10.2019
(51) Int. Cl.: B65G 47/86, B65G 47/90

(54) **GREIFARM, GREIFVORRICHTUNG SOWIE TRANSPORTVORRICHTUNG ZUM GREIFEN, HALTEN UND FÜHREN VON INSBESONDERE FLASCHENARTIGEN BEHÄLTERN**
GRIPPING ARM, GRIPPER DEVICE AND TRANSPORT DEVICE FOR GRIPPING, HOLDING AND GUIDING IN PARTICULAR BOTTLE-TYPE CONTAINERS
BRAS DE PRÉHENSION, DISPOSITIF DE PRÉHENSION AINSI QUE DISPOSITIF DE TRANSPORT DESTINÉ À LA PRÉHENSION, LE MAINTIEN ET LE GUIDAGE, EN PARTICULIER DES RÉCIPIENTS DE TYPE BOUTEILLE

(43) Veröffentlichungstag der Anmeldung: 05.05.2021
(73) Patentinhaber: Tyrolon-Schulnig GmbH, 6395 Hochfilzen (AT)
(72) Erfinder: Schulnig, Elmar, 6392 St. Jakob i.H. (AT)
(74) Vertreter: Rupprecht, Kay

(56) Entgegenhaltungen:
- EP-A1- 3 165 482
- WO-A1-2018/108248
- JP-A- H0 725 454

## Beschreibung

Die Erfindung betrifft einen Greifarm, eine Greifvorrichtung sowie eine Transportvorrichtung zum Halten, Greifen und Führen von insbesondere flaschenartigen Behältern.

Greifeinrichtungen zum Greifen, Halten und/oder Führen von insbesondere im Wesentlichen rund geformten Behältern sind bereits aus dem Stand der Technik bekannt und werden bei der fließbandtechnischen Bearbeitung von Behältern verwendet. Unter dem Begriff ,,Behälter" können im Zusammenhang mit der vorliegenden Erfindung insbesondere, aber nicht ausschließlich Behälter mit einem im Wesentlichen kreisförmigen Querschnitt verstanden werden, z. B. Fläschchen oder Dosen oder Gläschen, die jeweils den Gepflogenheiten entsprechend aus Glas, Metall oder Kunststoff bestehen können. Unter dem Begriff "im Wesentlichen rund geformt" sind im Zusammenhang mit der vorliegenden Erfindung nicht ausschließlich im geometrischen Sinne rund geformte Behälter zu verstehen, sondern beispielsweise auch ovale, regelmäßig vieleckige, usw., welche dann insbesondere einen im Wesentlichen kreisförmigen, beispielsweise aber auch ovalen oder vieleckigen Querschnitt aufweisen.

Beim Reinigen, Befüllen oder Verschließen werden die Behälter üblicherweise bei einer Eingangsstation mittels einer Greifeinrichtung mit mindestens einem Greifarmpaar gegriffen und zur nächsten Station im Bearbeitungsprozess transportiert. Eine solche Greifeinrichtung für ein Behältertransportsystem besitzt wenigstens zwei Greifarme und kann zwischen einer Greifstellung und einer Öffnungsstellung wechseln. Um einen Behälter zu transportieren, greifen die Greifarme normalerweise unterhalb des Halskragens oder - bei Flaschen oder anderen länglichen Behältern - um den Bauch des Behälters.

Ein Steuernocken fungiert hierfür als Öffnungsmittel und beispielsweise eine Spiralfeder als Schließmittel der Greifeinrichtung. Wenn die Greifeinrichtung durch den Steuernocken geöffnet wird, wird eine Kraft gegen eine Greifarminnenseite des Greifarms entgegen der Federkraft aufgewendet. Die Federkraft der Spiralfeder dient dabei nicht nur dem Schließen der Greifeinrichtung, sondern auch dem kraftschlüssigen Halten des Behälters. Daher ist die Federkraft entsprechend groß.

Aus der JP H0725454 ist eine Vereinfachung eines gesamten Aufbaus einer Vorrichtung zu entnehmen, indem auf einem Rotor ein Nockenelement zum Öffnen und Schließen jedes Paares von Spannarmen vorgesehen wird, wenn jedes Paar von Spannarmen, das in einen Nockenstößel eingreift, durch ein Antriebsmittel radial hin- und herbewegt wird. Nockenstößel sind hierbei jeweils an den distalen Enden eines jeden Paares von Spannarmen vorgesehen. Ein keilförmiger Nocken, der an einem Rotor befestigt ist, wird zwischen die beiden Nockenstößel gedrückt. Bei der Drehung zu einem Rotor werden die jeweiligen Klemmarme rückseitig und für die Radialbewegung des Rotors entfernt. Die jeweiligen Klammerarme werden durch die Hin- und Herbewegung der Klammerarme geöffnet und geschlossen, so dass eine Aufnahme durch Eingriffselemente der jeweiligen Arme geklemmt wird. So kann die Nockenfläche des keilförmigen Bechers entsprechend dem Außendurchmesser der Aufnahme eingestellt werden, um die gesamte Vorrichtung zu vereinfachen.

Die JP H0725454 offenbart den Oberbegriff des Anspruchs 1.

Die WO 2018/108248 A1 betrifft einen Greifarm für eine Greifeinrichtung zum Greifen, Halten und Führen von insbesondere flaschenartigen Behältern, mit einer Bohrung zur Aufnahme eines Lagerelements zum Befestigen des Greifarms in der Greifeinrichtung, mit einer Aufnahme für ein Schließmittel zum Bewegen des Greifarms von einer Öffnungsstellung in eine Greifstellung. Mit dem Ziel eine Reduzierung der Komponentenanzahl sowie eine Miniaturisierung des Greifarms zu erreichen, ist die Bohrung derart ausgebildet, ein als Schwenkwelle ausgebildetes Lagerelement aufzunehmen und mit dem Lagerelement verdrehsicher zu verbinden, um eine Schwenkbewegung des Lagerelements auf den Greifarm zum Bewegen des Greifarms on der Greifstellung in die Öffnungsstellung zu übertragen. Die Greifeinrichtung weist wenigstens ein Greifarmpaar aus den erfindungsgemäßen Greifarmen auf. Die Transportvorrichtung weist eine Mehrzahl von Greifeinrichtungen auf.

Insbesondere wenn der Behälter am Bauch gefasst werden soll, muss die Greifeinrichtung geeignet sein, den Behälter in einer bestimmten, insbesondere senkrechten Lage stabil festzuhalten. Die hohe Drehgeschwindigkeit von Transportvorrichtungen, die eine Vielzahl von insbesondere kreisförmig angeordneten Greifeinrichtungen aufweisen, verleiht insbesondere schweren oder gefüllten Behältern eine Beschleunigung, die entlang einer Längsachse des Behälters auf Grund der Form und/oder der Befüllung des Behälters unterschiedlich ausfallen kann und somit verschieden starke Kräfte auf die Greifeinrichtung ausüben kann. Aber auch bei einer linearen Bewegung der Greifeinrichtung kann ein Behälter eine Anfangs- bzw. Endbeschleunigung erfahren und somit Kräfte auf die Greifeinrichtung ausüben. Daher werden normalerweise Greifabschnitte der Greifarme verwendet, die eine auf den Bauch des Behälters passgenaue Form aufweisen und/oder an verschiedenen Stellen des Bauchs mittels mehrerer Greiffinger des Greifabschnitts entlang der Längsachse des Behälters zugreifen. Ein Schwenken des Behälters um seine Längsachse kann somit unterdrückt bzw. der Behälter beim Transport in seiner Lage stabilisiert werden.

Hierdurch ergeben sich Nachteile für die Greifeinrichtung, da nur Behälter einer bestimmten Form und Größe stabil und sicher gegriffen und transportiert werden können. Für den Fall, dass anders geformte Behälter transportiert werden sollen, muss der Greifabschnitt an die neue Form angepasst werden. Dies kann unter anderem durch neue Greifarme erreicht werden, deren Greiffinger jeweils für unterschiedliche Durchmesser am Bauch des Behälters entsprechend ausgebildet sind. Eine andere Alternative besteht darin, lediglich die Greiffinger auszutauschen. Nichtsdestotrotz muss die Transportvorrichtung mit den Greifeinrichtungen angehalten und umgebaut werden, wobei der Umbau zu einem zumindest teilweisen Betriebsstillstand führt und finanzielle Verluste und Kosten mit sich bringt.

Es ist daher die Aufgabe der vorliegenden Erfindung, einen Greifarm, eine Greifvorrichtung sowie eine Transportvorrichtung der eingangs genannten Art in vorteilhafter Weise dahingehend weiterzubilden, dass eine kompakte Greifeinrichtung aus einer geringen Anzahl von Komponenten bereitgestellt wird und eine eigenständige Anpassung des Greifarms an die Form des Behälters ermöglicht wird, die keiner Einwirkung von außen durch einen Benutzer bedarf.

Die Aufgabe wird erfindungsgemäß gelöst durch einen Greifarm mit den Merkmalen des Anspruchs 1. Mit Blick auf die Greifvorrichtung wird die Aufgabe erfindungsgemäß gelöst durch eine Greifvorrichtung mit den Merkmalen des Anspruchs 11. Mit Blick auf die Transportvorrichtung wird die Aufgabe erfindungsgemäß gelöst durch eine Transportvorrichtung mit den Merkmalen des Anspruchs 13.

Vorteilhafte Ausgestaltungen, Weiterbildungen und Varianten sind Gegenstand der Unteransprüche. Die im Hinblick auf den Greifarm aufgeführten Vorteile und bevorzugten Ausgestaltungen sind sinngemäß sowohl auf die Greifvorrichtung als auch auf die Transportvorrichtung zu übertragen und umgekehrt.

Konkret wird die auf den Greifarm gerichtete Aufgabe gelöst durch einen Greifarm für eine Greifvorrichtung zum Greifen, Halten und Führen von insbesondere flaschenartigen Behältern. Der Greifarm weist hierbei einen Grundkörper auf, an dem ein Greifabschnitt angeordnet ist.

Der Greifabschnitt ist hierbei um eine Schwenkachse schwenkbar gelagert. Die Schwenkachse ist im Wesentlichen horizontal orientiert. Der Greifabschnitt ist hierbei sowohl in als auch entgegen einer Schwenkrichtung schwenkbar.

Weitere Ausführungen zu dem allgemeinen Aufbau eines Greifarms für eine Greifvorrichtung sind beispielsweise aus der auf die Anmelderin zurückgehende DE 10 2014 111 564 A1 zu entnehmen, auf die insoweit an dieser Stelle Bezug genommen wird.

Zudem ist zumindest ein Begrenzungsmittel und zumindest ein Rückstellmittel vorgesehen. Das Begrenzungsmittel dient zur Begrenzung eines Schwenkbereichs des Greifabschnitts. Unter dem Schwenkbereich kann hierbei ein Bereich verstanden werden, der von einer in die Schwenkrichtung betrachtet maximalen ersten Auslenkung bis zu einer - entgegen der Schwenkrichtung betrachtet - maximalen zweiten Auslenkung begrenzt wird. Mit anderen Worten ist der Schwenkbereich durch eine maximale rechte Auslenkung und eine maximale linke Auslenkung begrenzt. Innerhalb des Schwenkbereichs ist der Greifabschnitt stufenlos schwenkbar. Hier und nachfolgend werden die Begriffe Auslenkung und Schwenken synonym verwendet, sofern nicht explizit etwas Anderes erwähnt wird.

Das Rückstellmittel dient hierbei zum vorzugsweise automatischen Zurückstellen des ausgeschwenkten Greifabschnitts in eine senkrechte Lage. Unter der Senkrechten Lage kann hierbei eine nicht ausgelenkte Position des Greifabschnitts verstanden werden, also, wenn dieser im Wesentlichen senkrecht orientiert ist.

Der Vorteil dieses Greifarms ist zum einen, dass durch die Schwenkbarkeit des Greifabschnitts Behälter unterschiedlicher Formen und Größe stabil und sicher gegriffen und transportiert werden können. Eine Anpassung an die unterschiedlichen Formen und Größen der Behälter erfolgt hierbei durch die schwenkbare Anordnung und Lagerung des Greifabschnitts, der sich somit stufenlos an die Kontur des Behälters anpassen kann.

Zum anderen ist durch das Rückstellmittel sichergestellt, dass nach einem Loslassen des Behälters der Greifabschnitt automatisch, also von alleine, in die Senkrechte Lage zurück schwenkt und somit beispielsweise erneut Behälter aufnehmen kann, für die die Ausrichtung des Greifabschnitts in einem nicht ausgeschwenkten Zustand ausgebildet ist.

In einer Ausführungsform ist das Rückstellmittel als ein Magnetpaar mit einem ersten Magneten und mit einem zweiten Magneten ausgebildet. Der erste Magnet ist hierbei an dem Grundkörper angeordnet während der zweite Magnet an dem Greifabschnitt angeordnet ist. Die beiden Magnete sind als sich einander anziehende Magnete ausgebildet und ermöglichen somit ein zuverlässiges Zurückstellen des Greifabschnitts in die Senkrechte Lage. Wird der Greifabschnitt also um die Schwenkachse geschwenkt, beispielsweise aufgrund dessen, dass er einen Behälter greift, dessen Kontur nicht mit dem nicht ausgeschwenkten Greifarm greifbar ist, so schwenkt auch der an dem Greifabschnitt angeordnete zweite Magnet mit aus. Hierbei wirkt jedoch stets die magnetische Anziehungskraft zwischen den beiden Magneten einem Widerstand des gegriffenen Behälters entgegen. Wird der Behälter losgelassen, so sorgt die magnetische Anziehungskraft der beiden Magnete dafür, dass der Greifarm in die senkrechte Lage zurückgestellt wird.

Zweckdienlicherweise sind die beiden Magnete des Magnetpaares derart angeordnet, dass sie sich, wenn sich der Greifabschnitt in der senkrechten Lage befindet, gegenüberliegen. So üben die beiden Magnete eine maximale Anziehungskraft aufeinander aus und stellen somit ein zuverlässigen Rückstellen des Greifabschnitts sicher.

Alternativ ist das Rückstellmittel als ein Federelement ausgebildet, welches eine Federkraft auf den Greifarm ausübt, sodass dieser in die senkrechte Lage zurückgestellt wird.

Gemäß einer bevorzugten Ausgestaltung ist das zumindest eine Begrenzungsmittel als ein Begrenzungsstift ausgebildet. Weiterhin weist der Greifabschnitt gemäß dieser bevorzugten Ausgestaltung eine Begrenzungsöffnung auf. Der Begrenzungsstift sitzt hierbei in der Begrenzungsöffnung ein, wobei ein Außendurchmesser des Begrenzungsstifts, also eine Dicke des Begrenzungsstifts, kleiner ist, als ein Innendurchmesser der Begrenzungsöffnung. Hierbei ist durch den Druchmesserunterschied ein (Lager-)Spiel zwischen dem Stift und der Öffnung ausgebildet, sodass der Schwenkbereich und somit ein Schwenken des Greifabschnitts durch ein Anliegen des Stifts an einer Innenwandung der Begrenzungsöffnung realisiert ist. Der Vorteil hierbei ist, dass auf diese Weise eine einfache Ausgestaltung des Begrenzungsmittels erreicht ist.

Die Begrenzungsöffnung ist vorzugsweise im Wesentlichen rund oder im Wesentlichen nierenförmig, insbesondere nach Art einer Kulissenführung ausgebildet. Hierdurch ist ebenfalls eine einfache technische und zugleich zuverlässige Realisierung der Schwenkbegrenzung erreicht.

In einer Ausführungsform begrenzt das zumindest eine Begrenzungsmittel eine maximale Schwenkbewegung relativ zu der senkrechten Lage gleich weit in und entgegen der Schwenkrichtung. D.h., dass das Begrenzungsmittel derart eingerichtet ist, dass der Greifabschnitt aus der senkrechten Lage heraus gleich weit in und entgegen der Schwenkrichtung schwenkbar ist. Mit anderen Worten "teilt" die senkrechte Lage den Schwenkbereich genau in der Mitte in zwei gleich große Teilbereiche auf.

Weiterhin verläuft die Schwenkachse mittig und symmetrisch zum Greifabschnitt. Dadurch wirken die gleichen Hebelkräfte beim Greifen auf z.B. die Greiffinger, die somit gleichmäßig belastet werden. Außerdem liegt der Schwerpunkt in der Mitte des Greifabschnitts und erlaubt dem Greifabschnitt, sich leichter zu drehen oder in einer zum Greifen des Behälters vorteilhaften Drehstellung zu verharren.

Das zumindest eine Begrenzungsmittel und das zumindest eine Rückstellmittel sind entlang einer, insbesondere senkrecht orientierten Längsachse angeordnet. So ist zum einen eine genaue Rückstellung des Greifarms in die senkrechte Lage und zum anderen eine gleichmäßige Aufteilung des Schwenkbereichs in und entgegen der Schwenkrichtung, ausgehend von der senkrechten Lage sichergestellt.

Der Greifabschnitt ist auf einen Schwenkbolzen des Grundkörpers aufgesteckt und durch ein Befestigungsmittel, beispielsweise eine Schraube oder eine Niete, schwenkbeweglich und in einer Axialrichtung unverschieblich, jedoch vorzugsweise reversibel angeordnet. Der Greifabschnitt bildet hierbei mit dem Schwenkbolzen eine formschlüssige Verbindung aus. Unter in einer Axialrichtung unverschieblich kann hierbei verstanden werden, dass bei angeordnetem Befestigungsmittel der Greifabschnitt ortsfest auf dem Schwenkbolzen aufgesteckt ist und er somit nicht von dem Schwenkbolzen abgezogen werden kann. Der Schwenkbolzen ist vielmehr im auf dem Schwenkbolzen aufgesteckten Zustand lediglich in und entgegen der Schwenkrichtung schwenkbar. Hierdurch sind eine einfache Montage sowie ein einfacher Austausch des Greifarms beispielsweise bei einer Beschädigung ermöglicht.

Gemäß einer alternativen Ausgestaltung ist der Greifabschnitt auf einen Schwenkbolzen des Grundkörpers aufgesteckt. Hierbei bildet der Greifabschnitt mit einer in ihm ausgeformten Nase und einer Vertiefung in dem Schwenkbolzen eine selbstsichernde Rastverbindung aus. Hierbei bildet der Greifabschnitt mit dem Schwenkbolzen ebenfalls eine formschlüssige Verbindung aus. Zusätzlich ergibt sich durch die zuvor genannte Nase der Vorteil, dass keine zusätzlichen, von außen einzubringenden Befestigungsmittel notwendig sind, an die sich Staub und Schmutz anlagern können. Außerdem ermöglichen die Nase und die Vertiefung eine stabile, aber auch wieder lösbare Befestigung bzw. Verbindung und unterliegen kaum einer Abnutzung. Des Weiteren sind alternative Ausführungsformen zum Schwenkbolzen möglich, z.B. als einteilige oder zweiteilige, ineinander steckbare Hohlzylinder.

In einer Weiterbildung des erfindungsgemäßen Greifarms ist der Greifabschnitt zumindest teilweise gabelartig geformt. Der Greifarm weist hierbei zumindest zwei Greiffinger auf, mit denen in einer Greifstellung ein Behälter gehalten werden kann. Die gabelartige Form des Greifabschnitts aus zumindest zwei Greiffingern erlaubt ein stabiles Greifen des Behälters, aber auch Materialeinsparung im Vergleich zu beispielsweise schaufelförmigen Greifabschnitten. Insbesondere in Verbindung mit der Schwenkachse kann der Greifabschnitt mit den Greiffingern zum Behälter angewinkelt bzw. gedreht werden, sich somit selbstständig an die Form des Behälters anpassen und den Behälter stabiler festhalten.

In einer Ausführungsform ist der Greifabschnitt einstückig, also monolithisch ausgebildet. Hierdurch kann Greifabschnitt aufgrund seiner einstückigen Ausbildung sehr rasch und kostengünstig ersetzt werden

Alternativ oder ergänzend hierzu weist der Greifabschnitt einen Kunststoff, insbesondere einen faserverstärkten Polyetheretherketon auf. Insbesondere ist der Greifarm aus einem derartigen Kunststoff gefertigt. Herkömmliche Greifarme bestehen aus Edelstahl und sind deshalb relativ teuer, wobei sich darüber hinaus im Betrieb der in Rede stehenden Greifeinrichtungen gezeigt hat, dass sich die metallischen Greifarme gelegentlich verbiegen, was zum einen beim Betrieb der Greifeinrichtung schwer erkennbar ist und zum anderen zu Beschädigungen der zu greifenden und transportierenden Behälter und/oder der gegenüberliegenden Greifarme, welche den Behälter übergeben bzw. übernehmen, und/oder anderer Armaturen führen kann. Werden die Greifarme hingegen aus Kunststoff gefertigt, lassen sie sich sehr günstig als Wegwerfartikel im Spritzgussverfahren herstellen. Des Weiteren weist Kunststoff für diesen Einsatz bessere Eigenschaften gegenüber Edelstahl auf, so dass eine Überbeanspruchung des Greifarms nicht zum Verbiegen, sondern zum sofortigen Bruch führt, was keine Folgebeschädigung der Flasche nach sich zieht und ein sofortiges Erkennen des überbeanspruchten Greifarms ermöglicht. Als vorteilhafter Kunststoff hat sich faserverstärktes Polyetheretherketon (PEEK) erwiesen, da es eine gute Steifigkeit bei gleichzeitiger ausreichender Biegsamkeit aufweist. PEEK ist ein hochtemperaturbeständiger thermoplastischer Kunststoff und die Faserverstärkung ermöglicht einen Faser-Kunststoff-Verbund mit hoher spezifischer Steifigkeit und Festigkeit. Kunststoff zeigt im Gegensatz zu herkömmlich verwendetem Metall bzw. Edelstahl kaum Verschleißerscheinungen bei der Reinigung mit Wasser. Durch einen durch Kunststoff geformten Greifarm entsteht ein leicht austauschbares Produkt, das nach seiner Abnutzung ohne Probleme entfernt und ohne große Kosten oder Herstellungszeiten ersetzt werden kann.

Die auf die Greifvorrichtung gerichtete Aufgabe wird konkret gelöst durch eine Greifvorrichtung zum Greifen, Halten und Führen von insbesondere flaschenartigen Behältern, wobei die Greifvorrichtung zumindest ein Greifarmpaar aus einem ersten Greifarm sowie aus einem komplementär zum ersten Greifarm ausgebildeten zweiten Greifarm aufweist. Sowohl der erste als auch der zweite Greifarm ist speziell einer der vorstehend beschriebenen Greifarme.

Weiterhin weist die Greifvorrichtung eine Lagereinheit zum Lagern des Greifarmpaares auf. Hierzu weist die Lagereinheit bevorzugt zwei Lagerbolzen zum schwenkbaren Anordnen des ersten Greifarms und des zweiten Greifarms auf.

Ferner weist die Greifvorrichtung zumindest ein Schließmittel auf. Das Schließmittel dient einem insbesondere selbsttätigen Schließen des Greifarmpaares von einer Öffnungsstellung in eine Greifstellung. Als das zumindest eine Schließmittel wird bevorzugt ein Federelement beispielsweise eine Schenkelfeder oder alternativ ein Magnetpaar herangezogen.

Gemäß einer bevorzugten Ausgestaltung der Greifvorrichtung sind der erste Greifarm und der zweite Greifarm um jeweils eine Schwenkachse relativ zueinander schwenkbar. Dies hat den Vorteil, dass mittels der Greifvorrichtung auch im Hinblick auf eine Umfangskontur asymmetrisch ausgestaltete Behälter sicher gegriffen werden können.

Konkret wird die auf die Transportvorrichtung gerichtete Aufgabe gelöst durch eine Transportvorrichtung zum Greifen, Halten und Führen von insbesondere flaschenartigen Behältern, wobei in Umfangsrichtung der Transportvorrichtung wenigstens eine Greifvorrichtung angeordnet ist. Bevorzugt sind entlang der gesamten Umfangsrichtung mehrere Greifvorrichtungen benachbart zueinander angeordnet. Bei der zumindest einen Greifvorrichtung handelt es sich insbesondere um die vorstehend beschriebene Greifvorrichtung. Aufgrund dieser Anordnung der Greifvorrichtungen wird die Transportvorrichtung auch als Transportstern bezeichnet.

Weiterhin ist die zumindest eine Greifvorrichtung derart angeordnet, dass das zumindest eine Greifarmpaar der Greifvorrichtung radial nach außen gerichtet ist.

Ausführungsbeispiele der Erfindung werden nachfolgend anhand der Figuren näher erläutert. Diese zeigen in teilweise stark vereinfachten Darstellungen:
- Fig. 1: eine Explosionsdarstellung eines erfindungsgemäßen Greifarms,
- Fig. 2: eine Explosionsdarstellung einer erfindungsgemäßen Greifvorrichtung,
- Fig. 3a: eine Frontalansicht auf die Greifvorrichtung mit sich innerhalb einer senkrechten Lage befindlichen Greifabschnitten,
- Fig. 3b: eine Frontalansicht auf die Greifvorrichtung mit sich um eine maximale erste Auslenkung ausgeschwenkten Greifabschnitten,
- Fig. 3c: eine Frontalansicht auf die Greifvorrichtung mit sich um eine maximale zweite Auslenkung ausgeschwenkten Greifabschnitten sowie
- Fig. 4: eine perspektivische Ansicht auf eine Transportvorrichtung mit daran angeordneten Greifvorrichtungen.

In den Figuren sind gleichwirkende Teile stets mit den gleichen Bezugszeichen dargestellt.

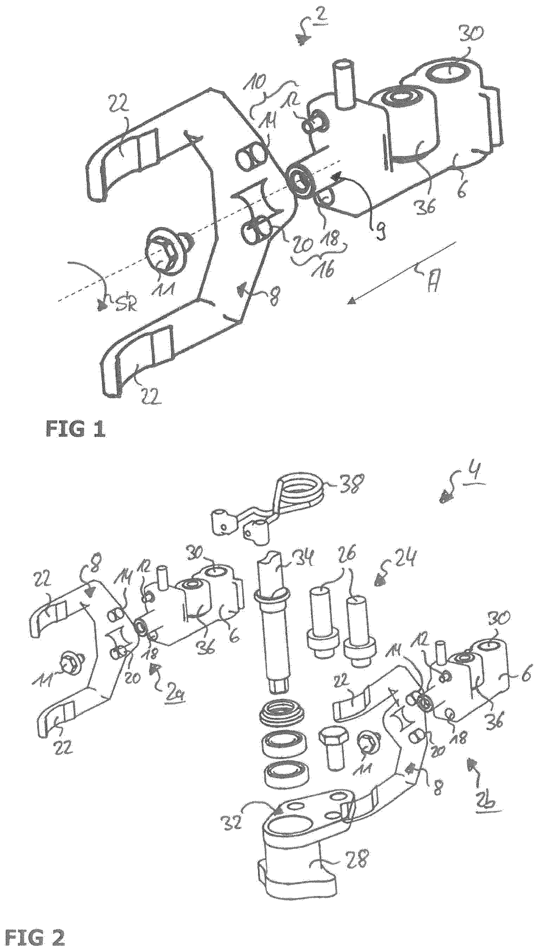

Fig. 1 zeigt eine Explosionsdarstellung eines Greifarms 2 für eine Greifvorrichtung 4 (vergleiche. Fig. 2) zum Greifen, Halten und Führen von insbesondere flaschenartigen Behältern (nicht gezeigt). Der Greifarm 2 weist einen Grundkörper 6 und einen an dem Grundkörper 6 angeordneten Greifabschnitt 8 auf. Der Greifabschnitt 8 ist hierbei um eine Schwenkachse S in und entgegen einer Schwenkrichtung SR schwenkbar gelagert. D.h. der Greifabschnitt 8 ist in und entgegen der Schwenkrichtung SE relativ zu dem Grundkörper 6 schwenkbar.

Um die Schenkbewegung des Greifabschnitts 8 zu realisieren, ist dieser auf einen Schwenkbolzen 9 des Grundkörpers 6 aufgesteckt und durch eine Befestigungsmittel 11 schwenkbeweglich und in einer Axialrichtung A unverschieblich angeordnet. Im Ausführungsbeispiel gemäß Figur 1 ist das Befestigungsmittel 11 als eine Schraube ausgebildet.

Alternativ kann der Greifabschnitt 8 auch auf den Schwenkbolzen 9 aufgesteckt sein und hierbei eine selbstsichernde Rastverbindung (nicht gezeigt) ausbilden. Um die selbstsichernde Rastverbindung auszubilden, ist dann eine ausgeformte Nase an dem Greifabschnitt vorgesehen, die mit einer Vertiefung innerhalb des Schwenkbolzens 9 die erwähnte selbstsichernde Rastverbindung ausbildet. Eine Schwenkbeweglichkeit in und entgegen der Schwenkrichtung SR ist hierbei nicht beeinträchtigt.

Der Greifabschnitt 8 ist einstückig, also monolithisch ausgebildet und weist einen Kunststoff auf. Speziell ist der Greifabschnitt 8 aus Kunststoff gebildet. Als Kunststoff wird hierbei vorzugsweise ein faserverstärktes Polyetheretherketon (PEEK) herangezogen, da es eine gute Steifigkeit bei gleichzeitiger ausreichender Biegsamkeit aufweist.

Ferner weist der Greifabschnitt 8 zum zuverlässigen Greifen der insbesondere flaschenartigen Behälter eine Gabelform auf. Hierzu weist der Greifabschnitt 8 zumindest zwei Greiffinger 22 auf.

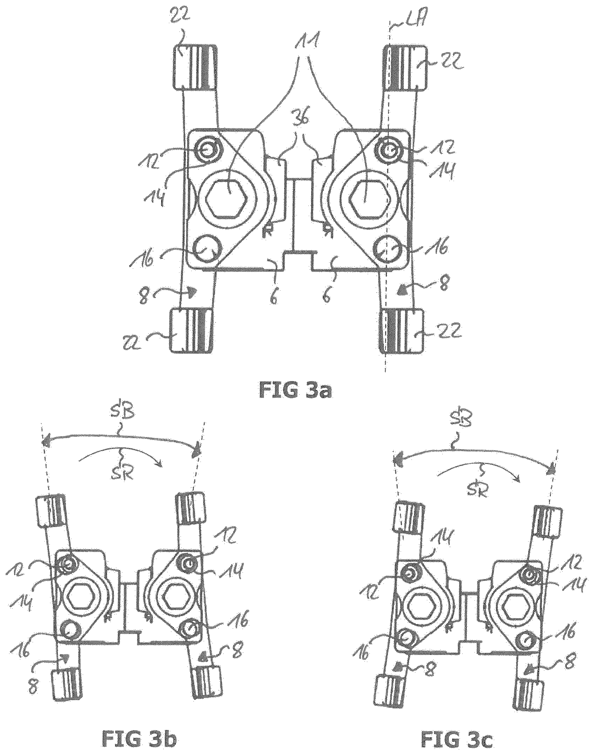

Der Greifarm 2 weist zumindest ein Begrenzungsmittel 10 auf. Das Begrenzungsmittel 10 dient einer Begrenzung eines Schwenkbereichs SB (vgl. Fig. 3b und 3c) des Greifabschnitts 8. Hierzu ist das zumindest eine Begrenzungsmittel 10 im Ausführungsbeispiel gemäß Fig. 1 als ein Begrenzungsstift 12 ausgebildet. Weiterhin weist der Greifabschnitt 8 eine Begrenzungsöffnung 14 auf, in der das Begrenzungsmittel 10, hier der Begrenzungsstift 12, einsitzt, wenn der Greifabschnitt 8 auf dem Schwenkbolzen 9 angeordnet ist.

Um die Schwenkbewegung in entgegen der Schwenkrichtung SR zuverlässig zu begrenzen, ist ein Außendurchmesser des Begrenzungsmittels 12 kleiner als ein Innendurchmesser der Begrenzungsöffnung 14. Hierdurch ist ein (Lager-)Spiel des Begrenzungsstifts 12 innerhalb der Begrenzungsöffnung 14 ermöglicht, sodass zur Begrenzung der Schwenkbewegung des Greifabschnitts 8 der Begrenzungsstift 12 an einer Seitenwandung der Begrenzungsöffnung 14 anliegt. (vgl. Fig. 3b, 3c).

Die Begrenzungsöffnung 14 ist im Ausführungsbeispiel rund ausgebildet. Alternativ kann sie jedoch auch nierenförmig nach Art einer Kulissenführung ausgebildet sein.

Weiterhin ist zumindest ein Rückstellmittel 16 vorgesehen, welches zu einem Zurückstellen des ausgeschwenkten Greifabschnitts 8 in eine senkrechte Lage (vgl. Fig. 3a) dient.

Im Ausführungsbeispiel gemäß Fig. 1 ist das Rückstellmittel 16 als ein Magnetpaar mit einem ersten Magneten 18 und einem zweiten Magneten 20 ausgebildet. Der erste Magnet 18 ist hierbei an und speziell in dem Grundkörper 6 angeordnet. Zweckdienlicherweise ist der erste Magnet 18 hierbei an einer dem Greifabschnitt 8 zugewandten Seite des Grundkörpers 6 angeordnet. Der zweite Magnet 20 ist speziell an einer dem Grundkörper 6 zugeordneten Seite des Greifabschnitts 8 angeordnet und speziell in dieser integriert.

Um das Zurückstellen zu ermöglichen, ist das Magnetpaar 18, 20 als ein sich anziehendes Magnetpaar ausgebildet, d. h. der erste Magnet 18 und der zweite Magnet 20 ziehen sich gegenseitig an. Speziell sind der erste Magnet 18 und der zweite Magnet 20 derart angeordnet, dass sie sich genau gegenüber liegen, wenn sich der Greifabschnitt 8 in der senkrechten Lage befindet. Wird der Greifabschnitt 8 in oder entgegen der Schwenkrichtung SR ausgelenkt, so sorgt die zwischen den beiden Magneten 18, 20 wirkende Anziehungskraft dafür, dass der Greifabschnitt 8 wieder in die senkrechte Lage zurückgezogen und somit zurückgestellt wird.

Die in Fig. 2 gezeigte Explosionsdarstellung einer erfindungsgemäßen Greifvorrichtung 4 zeigt die wesentlichen Komponenten einer derartigen Greifvorrichtung 4. Die Greifvorrichtung 4 ist ebenfalls zum Greifen, Halten und Führen von insbesondere flaschenartigen Behältern ausgebildet und weist hierzu zumindest eine Greifarmpaar aus einem ersten Greifarm 2a und einem zweiten Greifarms 2b auf. Der zweite Greifarm 2b ist komplementär zum ersten Greifarm 2a ausgebildet. Beide Greifarme 2a, 2b weisen je einen Greifabschnitt 8 auf. Bei den beiden Greifarmen 2a, 2b handelt es sich jeweils bevorzugt um den bereits vorstehend und in Fig. 1 beschriebenen Greifarm 2.

Weiterhin weist die Greifvorrichtung 4 zumindest eine Lagereinheit 24 auf, die einem Lagern des Greifarmpaares 2a, 2b dient. Hierzu weist die Lagereinheit zwei Lagerbolzen 26 und einen Lagerkörper 28 auf. Die Lagerbolzen 26 dienen einer Aufnahme der Greifarme 2 und speziell der Grundkörper 6. Hierzu weisen die Grundkörper 6 jeweils eine Bohrung 30 auf, die zu einer Aufnahme der Lagerbolzen 26 dienen.

In einem montierten Zustand sind dann die Greifarme 2 auf einer Oberseite 32 des Lagerkörpers 28 angeordnet. Zum Verstellen des Greifarmpaares von einer Greifstellung in eine Öffnungsstellung ist ein Steuernocken 34 vorgesehen, der mit zumindest einer Betätigungsrolle 36 je eines Greifarms 2 in Wirkverbindung steht.

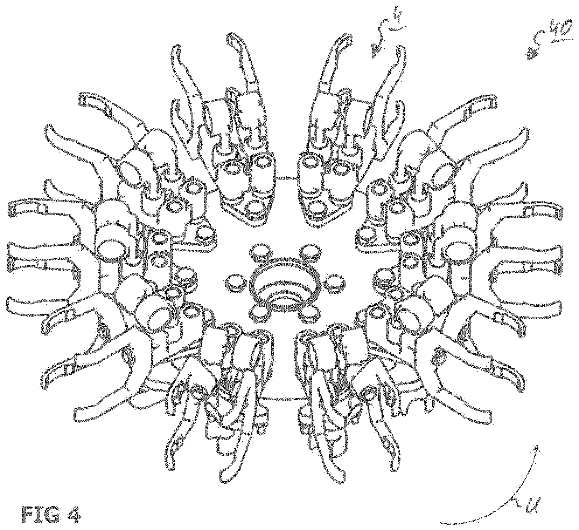

Zum Schließen des Greifarmpaares von der Öffnungsstellung in die Greifstellung ist zumindest ein Schließmittel 38 vorgesehen, welches im Ausführungsbeispiel gemäß Fig. 2 als eine Feder und speziell als eine Schenkelfeder ausgebildet ist. Alternativ kann das Schließmittel 38 auch als ein sich anziehendes Magnetpaar ausgebildet sein (vgl. Fig. 4). Das Schließmittel 38 ist im montierten Zustand derart eingerichtet, dass es in der Greifstellung eine Federkraft auf das Greifarmpaar ausübt, derart, dass dieses in die Greifstellung gezogen wird.

Beide Greifabschnitte 8 der in Fig. 2 gezeigten Greifvorrichtung 4 sind in bereits vorstehend beschriebener Weise um die Schwenkachse S schwenkbar gelagert und speziell auch relativ zueinander schwenkbar ausgebildet.

In Fig. 3a ist eine Frontalansicht auf die montierte Greifvorrichtung 4 gezeigt. Die Greifabschnitte 8 befinden sich hierbei in einer senkrechten Lage, also nicht in oder entgegen der Schwenkrichtung SR ausgelenkt. Gut zu erkennen ist hierbei ebenfalls, dass das zumindest eine Begrenzungsmittel 10 und das zumindest eine Rückstellmittel 16 entlang einer Längsachse LA angeordnet sind. Der Begrenzungsstift 12 befindet sich in dieser Lage des Greifabschnitts 8 bevorzugt mittig innerhalb der Begrenzungsöffnung 14, liegt also nicht an einer Innenwandung der Begrenzungsöffnung 14 an.

Fig. 3b zeigt eine Frontalansicht auf die montierte Greifvorrichtung, bei der beide Greifabschnitte 8 um eine maximale Auslenkung entgegen der Schwenkrichtung SR ausgelenkt sind (maximale erste Auslenkung). Die maximale Auslenkung entgegen der Schwenkrichtung SR ist hierbei als eine maximale Auslenkung nach links (in der Bildebene betrachtet) zu verstehen. Zur Begrenzung dieser Auslenkung liegt der jeweilige Begrenzungsstift der Greifarme in der Bildebene betrachtet an einer rechten Innenwandung der Begrenzungsöffnungen 14 an.

In analoger Weise ist in Fig. 3c eine Frontalansicht auf die montierte Greifvorrichtung 4 gezeigt, in der sich beide Greifabschnitte 8 in einer maximalen Auslenkung in Schwenkrichtung SR (maximale zweite Auslenkung). Zur Begrenzung dieser maximalen zweiten Auslenkung liegen die Begrenzungsstifte 12 an einer linken Innenwandung der Begrenzungsöffnungen 14 an.

Ergänzend hierzu ist es auch, wie bereits zuvor erwähnt, ermöglicht, dass beide Greifabschnitte 8 relativ zueinander ausgeschwenkt sind, d.h., dass beispielsweise ein Greifabschnitt 8 in die Schwenkrichtung SR ausgeschwenkt ist und der jeweils andere Greifabschnitt 8 gleichzeitig entgegen der Schwenkrichtung SR ausgelenkte ist.

Fig. 4 zeigt eine perspektivische Ansicht auf eine Transportvorrichtung 40, der zum Greifen, Halten und Führen von insbesondere flaschenartigen Behältern ausgebildet ist. Hierbei sind in einer Umfangsrichtung U der Transportvorrichtung 40 wenigstens eine, vorzugsweise mehrere und im Ausführungsbeispiel zehn Greifvorrichtungen 4 der zuvor beschriebenen Art angeordnet. Die Greifvorrichtungen 4 sind hierbei derart angeordnet, dass die Greifarmpaare und speziell die Greifabschnitte 8 der Greifvorrichtungen 4 jeweils radial nach außen gerichtet sind.

Ebenso sind die Greifvorrichtungen 4 der Transportvorrichtung 40 im Ausführungsbeispiel gemäß Fig. 4 mit dem bereits vorstehend erwähnten alternativen Schließmittel 38 ausgeführt. D.h., die Greifvorrichtungen 4 der Transportvorrichtung 40 weisen ein sich anziehendes Magnetpaar als Schließmittel 38 auf.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung gemäß der Ansprüche 1 - 13 zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung gemäß der Ansprüche 1 - 13 zu verlassen.

### Bezuaszeichenliste

- 2: Greifarm
- 4: Greifvorrichtung
- 6: Grundkörper
- 8: Greifabschnitt
- 9: Schwenkbolzen
- 10: Begrenzungsmittel
- 11: Befestigungsmittel
- 12: Begrenzungsstift
- 14: Begrenzungsöffnung
- 16: Rückstellmittel
- 18: erster Magnet
- 20: zweiter Magnet
- 22: Greiffinger
- 24: Lagereinheit
- 26: Lagerbolzen
- 28: Lagerkörper
- 30: Bohrung
- 32: Oberseite
- 34: Steuernocken
- 36: Betätigungsrolle
- 38: Schließmittel
- 40: Transportvorrichtung
- S: Schwenkachse
- SR: Schwenkrichtung
- SB: Schwenkbereich
- A: Axialrichtung
- LA: Längsachse
- U: Umfangsrichtung

## Patentansprüche

1. Greifarm (2) für eine Greifvorrichtung (4) zum Greifen, Halten und Führen von flaschenartigen Behältern, aufweisend:
- einen Grundkörper (6) sowie
- einen an dem Grundkörper (6) angeordneten Greifabschnitt (8), wobei der Greifabschnitt (8) um eine Schwenkachse (S), die mittig und symmetrisch zum Greifabschnitt (8) verläuft, in und entgegen einer Schwenkrichtung (SR) schwenkbar gelagert ist, wobei
- zumindest ein Begrenzungsmittel (10) vorgesehen ist, zur Begrenzung eines Schwenkbereichs (SB) des Greifabschnitts (8),
- zumindest ein Rückstellmittel (16) vorgesehen ist, zum Zurückstellen des ausgeschwenkten Greifabschnitts (8) in eine senkrechte Lage **dadurch gekennzeichnet, dass**
- der Greifabschnitt (8) auf einen Schwenkbolzen (9) des Grundkörpers (6) aufgesteckt ist und durch ein Befestigungsmittel (11) schwenkbeweglich und in einer Axialrichtung (A) unverschieblich angeordnet ist.

2. Greifarm (2) nach Anspruch 1
**dadurch gekennzeichnet, dass**
das Rückstellmittel (16) als ein Magnetpaar mit einem ersten Magneten (18) und einem zweiten Magneten (20) ausgebildet ist, wobei der erste Magnet (18) an dem Grundkörper (6) angeordnet ist und der zweite Magnet (20) an dem Greifabschnitt (8) angeordnet ist.

3. Greifarm (2) nach einem der beiden vorhergehenden Ansprüche,
**dadurch gekennzeichnet, dass**
das zumindest eine Begrenzungsmittel (10) als ein Begrenzungsstift (12) ausgebildet ist und der Greifabschnitt (8) eine Begrenzungsöffnung (14) aufweist in der das Begrenzungsmittel (10) einsitzt, wobei ein Außendurchmesser des Begrenzungsmittels (10) kleiner ist als ein Innendurchmesser der Begrenzungsöffnung (14).

4. Greifarm (2) nach Anspruch 3,
**dadurch gekennzeichnet, dass**
die Begrenzungsöffnung (14) im Wesentlichen rund oder im Wesentlichen nierenförmigausgebildet ist.

5. Greifarm (2) nach einem der vorhergehenden Ansprüche,
**dadurch gekennzeichnet, dass**
das zumindest eine Begrenzungsmittel (10) eine maximale Schwenkbewegung des Greifabschnitts (8) relativ zur der senkrechten Lage gleich weit in und entgegen der Schwenkrichtung (SR) begrenzt.

6. Greifarm (2) nach einem der Ansprüche 1 bis 5,
**dadurch gekennzeichnet, dass**
der Greifabschnitt (8) auf einen Schwenkbolzen (9) des Grundkörpers (6) aufgesteckt ist und hierbei eine an dem Greifabschnitt (8) ausgeformte Nase mit einer Vertiefung innerhalb des Schwenkbolzens (9) eine selbstsichernde Rastverbindung ausbildet.

7. Greifarm (2) nach einem der vorhergehenden Ansprüche,
**dadurch gekennzeichnet, dass**
der Greifabschnitt (8) zumindest teilweise gabelartig geformt ist.

8. Greifarm (2) nach einem der vorhergehenden Ansprüche,
**dadurch gekennzeichnet, dass**
das zumindest eine Begrenzungsmittel (10) und das zumindest eine Rückstellmittel (16) entlang einer Längsachse (LA) angeordnet sind.

9. Greifarm (2) nach einem der vorhergehenden Ansprüche,
**dadurch gekennzeichnet, dass**
der Greifabschnitt (8) einstückig ausgebildet ist.

10. Greifarm (2) nach einem der vorhergehenden Ansprüche,
**dadurch gekennzeichnet, dass**
der Greifabschnitt (8) einen Kunststoff, insbesondere ein faserverstärktes Polyetheretherketon, aufweist.

11. Greifvorrichtung (4) zum Greifen, Halten und Führen von flaschenartigen Behältern, aufweisend:
- zumindest ein Greifarmpaar aus einem ersten Greifarm (2a) sowie einem komplementär zum ersten Greifarm (2a) ausgebildeten zweiten Greifarm (2b) nach einem der Ansprüche 1 bis 10,
- zumindest eine Lagereinheit (24) zum Lagern des Greifarmpaares,
- zumindest ein Schließmittel (38) zum Schließen des Greifarmpaares von einer Öffnungsstellung in eine Greifstellung sowie
- zumindest ein Öffnungsmittel zum Öffnen des Greifarmpaares von der Schließstellung in die Öffnungsstellung.

12. Greifvorrichtung (4) nach Anspruch 11,
**dadurch gekennzeichnet, dass**
der erste Greifarm (2a) und der zweite Greifarm (2b) um jeweils eine Schwenkachse (S) relativ zueinander schwenkbar sind.

13. Transportvorrichtung (40) zum Greifen, Halten und Führen von flaschenartigen Behältern, wobei in einer Umfangsrichtung (U) der Transportvorrichtung (40) wenigstens eine Greifvorrichtung (4), nach einem der Ansprüche 11 oder 12 angeordnet ist, derart, dass das
zumindest eine Greifarmpaar der Greifvorrichtung (4) radial nach außen gerichtet ist.

## Claims

1. A gripping arm (2) for a gripping device (4) for gripping, holding and guiding bottle-type containers, comprising:
- a base body (6) as well as
- a gripping section (8) arranged on the base body (6), wherein the gripping section (8) is pivotably mounted about a pivot axis (5) running centrally and symmetrically to the gripping section (8) in and against a direction of pivoting (SR),
wherein
- at least one limiting means (10) is provided for limiting a pivoting range (SB) of the gripping section (8),
- at least one resetting means (16) is provided for returning the outward pivoted gripping section (8) to a vertical position,
**characterized in that**
- the gripping section (8) is mounted on a pivot pin (9) of the base body (6) and arranged to be pivotable and non-displaceable in an axial direction (A) via a fixing means (11).

2. The gripping arm (2) according to claim 1,
**characterized in that**
the resetting means (16) is a pair of magnets comprising a first magnet (18) and a second magnet (20), wherein the first magnet (18) is arranged on the base body (6) and the second magnet (20) is arranged on the gripping section (8).

3. The gripping arm (2) according to one of the two preceding claims,
**characterized in that**
the at least one limiting means (10) is configured as a banking pin (12) and the gripping section (18) exhibits a limit opening (14) in which the at least one limiting means (10) is seated, wherein an outer diameter of the limiting means (10) is smaller than an inner diameter of the limit opening (14).

4. The gripping arm (2) according to claim 3,
**characterized in that**
the limit opening (14) is substantially round or substantially kidney-shaped.

5. The gripping arm (2) according to one of the preceding claims,
**characterized in that**
the at least one limiting means (10) limits a maximum pivoting movement of the gripping section (8) relative to the vertical position in and against the direction of pivoting (SR) to the same extent.

6. The gripping arm (2) according to one of claims 1 to 5,
**characterized in that**
the gripping section (8) is mounted onto a pivot pin (9) of the base body (6) and a projection formed on the gripping section (8) thereby forms a self-locking snap-lock connection with a recess in the pivot pin (9).

7. The gripping arm (2) according to one of the preceding claims,
**characterized in that**
the gripping section (8) is at least partially formed in the shape of a fork.

8. The gripping arm (2) according to one of the preceding claims,
**characterized in that**
the at least one limiting means (10) and the at least one resetting means (16) are arranged along one longitudinal axis (LA).

9. The gripping arm (2) according to one of the preceding claims,
**characterized in that**
the gripping section (8) is integrally formed.

10. The gripping arm (2) according to one of the preceding claims,
**characterized in that**
the gripping section (8) comprises a plastic, in particular a fiber-reinforced polyether ether ketone.

11. A gripper device (4) for gripping, holding and guiding bottle-type containers, comprising:
- at least one gripper arm pair of a first gripping arm (2a) as well as a second gripping arm (2b) of complementary form to the first gripping arm (2a) according to one of claims 1 to 10,
- at least one bearing unit (24) for supporting the gripper arm pair,
- at least one closing means (38) for closing the gripper arm pair from an open position into a gripping position as well as
- at least one opening means for opening the gripper arm pair from the closed position into the open position.

12. The gripper device (4) according to claim 11,
**characterized in that**
the first gripping arm (2a) and the second gripping arm (2b) are in each case pivotable relative to one another about a pivot axis (S).

13. A transport device (40) for gripping, holding and guiding bottle-type containers, wherein at least one gripper device (4) according to one of claims 11 or 12 is arranged in a circumferential direction (U) of the transport device (40) such that the at least one gripper arm pair of the gripper device (4) is directed radially outward.

## Revendications

1. Bras de préhension (2) pour un dispositif de préhension (4) destiné à la préhension, le maintien et le guidage des récipients de type bouteille, comportant :
- un corps de base (6) ainsi que
- une partie de préhension (8) agencée au corps de base (6), dans laquelle la partie de préhension (8) est montée de manière à pouvoir pivoter dans et opposée à une direction de pivotement (SR) autour d'un axe de pivotement (S) qui s'étend de manière centrale et symétrique à la partie de préhension (8),
dans lequel
- au moins un moyen de limitation (10) est prévu pour limiter une portée de pivotement (SB) de la partie de préhension (8),
- au moins un moyen de rappel (16) est prévu pour remettre la partie de préhension (8) pivotée dans une position verticale,
**caractérisé en ce que**
- la partie de préhension (8) est montée sur un axe de pivotement (9) du corps de base (6) et est agencée de manière à pouvoir être déplacé de façon pivotante par un moyen de fixation (11) et à ne pas pouvoir être déplacé dans une direction axiale (A).

2. Bras de préhension (2) selon la revendication 1,
**caractérisé en ce que**
le moyen de rappel (16) est formé en tant que paire d'aimants avec un premier aimant (18) et un second aimant (20), dans lequel le premier aimant (18) est agencé au corps de base (6) et le second aimant (20) est agencé à la partie de préhension (8).

3. Bras de préhension (2) selon l'une quelconque des revendications précédentes,
**caractérisé en ce que**
l'au moins un moyen de limitation (10) est formé en tant que goupille de limitation (12), et la partie de préhension (8) comporte une ouverture de limitation (14), dans laquelle se trouve le moyen de limitation (10), dans lequel un diamètre extérieur du moyen de limitation (10) est inférieur à un diamètre intérieur de l'ouverture de limitation (14).

4. Bras de préhension (2) selon la revendication 3,
**caractérisé en ce que**
l'ouverture de limitation (14) est sensiblement rond ou sensiblement en forme de rein.

5. Bras de préhension (2) selon l'une quelconque des revendications précédentes,
**caractérisé en ce que**
l'au moins un moyen de limitation (10) limite de manière équidistante dans et opposée à la direction de pivotement (SR) un mouvement de pivotement maximal de la partie de préhension (8) par rapport à la position verticale.

6. Bras de préhension (2) selon l'une quelconque des revendications 1 à 5,
**caractérisé en ce que**
la partie de préhension (8) est monté sur un axe de pivotement (9) du corps de base (6) et ici un nez moulé à la partie de préhension (8) avec un évidement dans l'axe de pivotement (9) forme une liaison à encliquetage autobloquante.

7. Bras de préhension (2) selon l'une quelconque des revendications précédentes,
**caractérisé en ce que**
la partie de préhension (8) est au moins partiellement en forme de fourchette.

8. Bras de préhension (2) selon l'une quelconque des revendications précédentes,
**caractérisé en ce que**
l'au moins un moyen de limitation (10) et l'au moins un moyen de rappel (16) sont agencés le long d'un axe longitudinal (LA).

9. Bras de préhension (2) selon l'une quelconque des revendications précédentes,
**caractérisé en ce que**
la partie de préhension (8) est formée d'une seule pièce.

10. Bras de préhension (2) selon l'une quelconque des revendications précédentes,
**caractérisé en ce que**
la partie de préhension (8) comporte une matière plastique, surtout un polyétheréthercétone renforcé par des fibres.

11. Dispositif de préhension (4) destiné à la préhension, le maintien et le guidage des récipients de type bouteille, comportant :
- au moins une paire de bras de préhension d'un premier bras de préhension (2a) ainsi que d'un second bras de préhension (2b) formé de manière complémentaire au premier bras de préhension (2a) selon l'une quelconque des revendications 1 à 10
- au moins une unité de palier (24) pour supporter la paire de bras de préhension,
- au moins un moyen de fermeture (38) pour fermer la paire de bras de préhension d'une position d'ouverture dans une position de préhension ainsi que
- au moins un moyen d'ouverture pour ouvrir la paire de bras de préhension de la position de fermeture dans la position d'ouverture.

12. Dispositif de préhension (4) selon la revendication 11, **caractérisé en ce que**
le premier bras de préhension (2a) et le second bras de préhension (2b) chacun peuvent pivoter l'un par rapport à l'autre autour d'un axe de pivotement (S).

13. Dispositif de transport (40) destiné à la préhension, le maintien et le guidage des récipients de type bouteille, dans lequel dans une direction circonférentielle (U) du dispositif de transport (40) au moins un dispositif de préhension (4) selon l'une quelconque des revendications 11 ou 12 est agencé, de sorte que l'au moins une paire de bras de préhension du dispositif de préhension (4) est orientée radialement vers l'extérieur.
